# EUROPÄISCHE PATENTANMELDUNG

(11) **EP 2 703 337 A1**
(43) Veröffentlichungstag der Anmeldung: **05.03.2014**
(21) Anmeldenummer: 13004219.5
(22) Anmeldetag: 27.08.2013
(51) Int. Cl.: B67D 7/00, B67D 7/32, F16L 55/10

(54) **Sicherheitsvorrichtung für Kesselbetankung**

(30) Priorität: 27.08.2012 DE 102012016760
(71) Anmelder: SVT GmbH, 58332 Schwelm (DE)
(72) Erfinder: Mertens, Klaus, 58640 Iserlohn (DE)
(74) Vertreter: Maxton Langmaack & Partner

(57) **Zusammenfassung**

Die Erfindung betrifft eine Fluidverladevorrichtung (1) mit einem Verladearm (2) mit zumindest einer Fluidleitung (3) zum Transport eines Fluids zwischen der Fluidverladevorrichtung (1) und einem transportablen, bewegbar angeordneten Kessel (4), mit einer Ankopplungsvorrichtung (5) zum Ankoppeln der Fluidleitung (3) an den Kessel (4) und mit einer Sicherheitstrennvorrichtung (6) in der Fluidleitung (3), wobei die Sicherheitstrennvorrichtung (6) in der Lage ist, die Fluidleitung (3) zu verschließen und die Fluidleitung (3) derart aufzutrennen, dass deren Verbindung zum Kessel (4) getrennt ist, wobei ein kraftübertragender, mechanisch wirkender Auslöser (7) mit der Sicherheltstrennvorrichtung (6) verbunden ist, der bei einer Bewegung des Kessels (4) die Sicherheitstrennvorrichtung (6) aktiviert. Auch wird ein Verfahren zum Auslösen der Sicherheitstrennvorrichtung (6)derartiger Fluidverladevorrichtungen(1) vorgeschlagen.

## Beschreibung

Die Erfindung betrifft eine Fluidverladevorrichtung mit einem Verladearm mit zumindest einer Fluidleitung zum Transport eines Fluids zwischen der Fluidverladevorrichtung und einem transportablen, bewegbar angeordneten Kessel, mit einer Sicherheitstrennvorrichtung in der Fluidleitung.

Ein beispielhafter Verladearm, der eine Fluidzuleitung und eine Gasrückführleitung umfasst, ist beispielsweise aus der DE 2 334 303 A1 bekannt. Mit diesem können Flüssigkeiten in einen zu betankenden Kessel überführt werden. Fluidverladevorrichtungen für Kesselbetankungen gehören zum Stand der Technik. Vor allem bei hoch gefährlichen Fluiden werden besondere Anforderungen an die Sicherheitsvorrichtung für eine Kesselbetankung gelegt. So wird der Kessel bzw. das Fahrzeug, auf dem der Kessel angeordnet ist, durch ein oder mehrere Bremsen gesichert. Auch Bremsklötze können zum Einsatz gelangen, die beispielsweise zusätzlich genutzt werden.

Fluidverladevorrichtungen werden beispielsweise von der Firma SVT GmbH angeboten. Unter der Bezeichnung "Terra" werden Verladevorrichtungen insbesondere für Kesselwagen und Tankwagen angeboten. Die Obenverladearme der Baureihe TERRA-Komplex werden für die offene und geschlossene Verladung von Tankfahrzeugen und Eisenbahnkesselwagen eingesetzt. Die Baureihe TERRA-Duplex ist eine Sonderform der Baureihe TERRA-Komplex und zeichnet sich dadurch aus, dass auch die Gasrückführung durch eine Rohrleitung mit Drehgelenken erfolgt. Die Anordnung ist so gewählt, dass eine gemeinsame Verwendung von Absaughaube, Gegenlager etc. möglich wird. Die Bodenverladearme der Baureihe TERRA-Max sind bestimmt für die Be- und Entladung von Eisenbahnkesselwagen und Tankfahrzeugen mit seitlichen oder hinteren Fahrzeuganschlüssen.

Aufgabe der vorliegenden Erfindung ist daher, die Gefahr eines Austretens eines hochgefährlichen Fluides beim Verladen des Fluides von einer Verladevorrichtung hin zu einem Kessel weiter zu verringern.

Diese Aufgabe wird mit einer Fluidverladevorrichtung mit den Merkmalen des Anspruches 1 sowie mit einem Verfahren mit den Merkmalen des Anspruches 10 gelöst. Weitere Vorteilhafte Ausgestaltungen und Merkmale gehen aus den jeweiligen Unteransprüchen und der nachfolgenden Beschreibung hervor. Insbesondere können auch ein oder mehrere Merkmale aus den unabhängigen wie abhängigen Ansprüchen durch ein oder mehreren Merkmale aus der Beschreibung ergänzt und/oder ersetzt werden. Auch können ein oder mehrere Merkmale aus jeweils verschiedenen Ausgestaltungen der Erfindung zur weiteren Ausbildungen der Erfindung verknüpft werden.

Es wird eine Fluidverladadevorrichtung mit einem Verladearm mit zumindest einer Fluidleitung zum Transport eines Fluids zwischen der Fluidverladevorrichtung und einem transportablen, bewegbar angeordnetem Kessel vorgeschlagen. Des Weiteren weist die Fluidverladevorrichtung eine Ankopplungsvorrichtung zum Ankoppeln der Fluidleitung an den Kessel und eine Sicherheitstrennvorrichtung in der Fluidleitung auf. Die Sicherheitstrennvorrichtung ist in der Lage, die Fluidleitung zu verschließen. Außerdem ist die Sicherheitstrennvorrichtung in der Lage die Fluidleitung derart aufzutrennen, dass deren Verbindung zum Kessel getrennt ist, wobei ein kraftübertragender, mechanisch wirkender Auslöser mit der Sicherheitstrennvorrichtung verbunden ist, der bei einer Bewegung des Kessels die Sicherheitstrennvorrichtung aktiviert.

Als transportabler, bewegbar angeordneter Kessel ist im Sinne der Erfindung ein landgebundener Transportkessel zu verstehen. Dieser kann beispielsweise als ein Kesselwagen einer schienengebundenen Transporteinrichtung vorliegen oder auch als ein Tankwagen. Auch kann der Kessel auf einem Lastkraftwagen oder einem Hänger angeordnet sein und so straßengebunden transportiert werden. Auch kann der Kessel in einem Containergehäuse angeordnet sein und als Containerfracht transportiert werden. Die Fluidverladevorrichtung ist insbesondere seitlich an einem Bahngleis befestigt. In einer weiteren Ausführungsform kann die Fluidverladevorrrichtung auch an einem Parkplatz eines Fahrzeuges, zum Beispiel eines LKWs, angeordnet sein. Der Verladearm ist vorzugsweise gelenkig an der Fluidverladevorrichtung angeordnet. In einer speziellen Ausführungsform ist der Verladearm in einer Ebene horizontal zu dem Boden schwenkbar, auf welchem die Fluidverladevorrichtung befestigt ist. In einer weiteren Ausführungsform ist der Verladearm in einer weiteren Ebene schwenkbar, welche die erste horizontale Ebene schneidet. Insbesondere weist der Verladearm eine Fluidleitung auf, welche das Fluid von einem ersten Behälter, welcher raumfest angeordnet ist, zu dem Kessel hin transportieren kann. In einer weiteren Ausführungsform ist die Fluidleitung in dem Verladearm integriert. Der Verladearm kann mehrere Gelenke aufweisen. Gemäß einer Ausgestaltung besteht der Verladearm aus zwei Rohren, welche über ein Gelenk und/oder ein Verbindungsstück zur fluiddichten Übertragung miteinander verbunden sind. Bevorzugt werden Verladearme eingesetzt, wie sie unter der Bezeichnung "Terra" durch die Anmelderin unter der Webseite "www.svt-gmbh.com" vertrieben werden. Vorzugsweise weist der Verladearm eine Leitung für das in den Kessel zu übertragende Fluid und eine zweite Leitung für das aus dem Kessel während der Befüllung abzuführende Gas auf. Bevorzugt sind die erste und die zweite Leitung jeweils ausschließlich aus Rohren aufgebaut und ohne einen Schlauchabschnitt.

Die Ankopplungsvorrichtung der Fluidverladevorrichtung koppelt den Kessel mit der Fluidleitung. Insbesondere koppelt die Ankopplungsvorrichtung einen ersten Flansch mit einem zweiten Flansch. Die Ankopplungsvorrichtung kann hierbei eine automatische und/oder eine händische Kopplung vorsehen. Auch kann eine händisch und/oder auch automatische Sicherung vorgesehen sein. Beispielsweise kann hierbei eine Kopplungsvorrichtung vorgesehen werden, wie sie zum Beispiel prinzipiell aus der DE 10 2007 043 381 der Anmelderin hervorgeht. Der erste Flansch ist bevorzugt mit einer Fluidzuführung verbunden, welche in den Kessel führt. In einer Ausgestaltung ist an dem zweiten Flansch die Fluidleitung angeordnet. Beispielsweise führt dieser Abschnitt der Fluidleitung zu der Sicherheitstrennvorrichtung. Insbesondere verbindet die Sicherheitstrennvorrichtung verschiedene Abschnitte der Fluidleitung und ermöglicht eine Trennung der Fluidleitung, ohne dass eine Ankoppelung mit der Kesselfluidzuführung in fluiddichter Weise aufgelöst werden müsste. Bevorzugt verbindet die Sicherheitstrennvorrichtung im passiven Zustand zwei verschiedene Abschnitte der Fluidleitung miteinander. Der passive Zustand beschreibt hierbei die Situation, dass die Sicherheitstrennvorrichtung eine Fluiddurchführung ermöglicht. Im aktiven Zustand der Sicherheitstrennvorrichtung hingegen schließt insbesondere ein erster Teil der Sicherheitstrennvorrichtung einen ersten Abschnitt der Fluidleitung und ein zweiter Teil der Sicherheitstrennvorrichtung einen zweiten Abschnitt der Fluidleitung. Die Sicherheitstrennvorrichtung kann insbesondere in aktiver Stellung, das bedeutet, wenn zwei voneinander getrennte und jeweils abgedichtete Leitungen vorliegen, zwei voneinander separierte Teile aufweisen. In einer besonderen Ausführungsform sind die beiden Teile der Sicherheitstrennvorrichtung im passiven Zustand so positioniert, dass jeweils eine Feder am ersten und am zweiten Teil der Sicherheitstrennvorrichtung zusammengepresst werden und eine Federkraft auf jeweils das erste und auch auf das zweite Teil der Sicherheitstrennvorrichtung wirkt.
Eine weitere Ausgestaltung sieht vor, dass die Sicherheitstrennvorrichtung beispielsweise mit der Ankopplungsvorrichtung eine Baukomponente bildet, vorzugsweise die Sicherheitstrennvorrichtung mit der Ankopplungsvorrichtung integriert ist. Eine Ausgestaltung sieht vor, dass es keine weitere Rohrleitung zwischen der Sicherheitstrennvorrichtung und der Ankopplungsvorrichtung gibt. Vielmehr geht über einen Anschlußflansch der Ankopplungsvorrichtung die Fluiddurchführung direkt zu der Sicherheitstrennvorrichtung.

Eine weitere Ausgestaltung sieht vor, dass die Sicherheitstrennvorrichtung und die Ankopplungsvorrichtung jeweils getrennte Komponenten darstellen, die über beispielweise ein Rohrstück miteinander verflanscht sind. Zwischen der Sicherheitstrennvorrichtung und der Ankopplungsvorrichtung kann auch ein Drehgelenk angeordnet sein, beispielweise ein Drehgelenk, wie es aus der DE 10 2011 018 162 der Anmelderin hervorgeht.

Bevorzugt ist die Sicherheitstrennvorrichtung in unmittelbarer Nähe zur Ankopplungsvorrichtung angeordnet. Weiterhin ist es bevorzugt, wenn zu jeder Leitung, auch beispielsweise einer Gasrückführungsleitung der Ladevorrichtung eine Sicherheitstrennvorrichtung zugeordnet ist, besonderes bevorzugt in jeder Leitung angeordnet ist.

Der Auslöser der Fluidverladevorrichtung ist mit der Sicherheitstrennvorrichtung verbunden. Der Auslöser ist kraftübertragend, das bedeutet, er ist in der Lage, eine Zugkraft und/oder Druckkraft zu übertragen. Mechanisch heißt in diesem Zusammenhang, dass der Auslöser mittels mechanischer Mittel die Kraftübertragung vornimmt. Mechanische Mittel können hier beispielsweise eine Stange, ein Seil, ein mechanischer Wirktrieb, ein Hebeltrieb, ein mechanisches Getriebe oder ähnliches umfassen. Beispielsweise kann der Auslöser oder ein Teil davon starr sein, elastisch und/oder plastisch, längenveränderbar oder in sonstiger Weise ausgebildet sein. Eine Ausgestaltung sieht vor, dass der Auslöser eine Wegreserve aufweist, das bedeutet, er löst erst dann die Sicherheitstrennvorrichtung aus, wenn eine gewisse Relativbewegung vollzogen ist. Dadurch wird verhindert, dass schon bei kleinsten Relativbewegungen die Auslösung der Sicherheitstrennvorrichtung durch den Auslöser erfolgt. In bevorzugter Weise ist der Auslöser direkt mit der Sicherheitstrennvorrichtung verbunden, in einer anderen Ausführungsform über einen Hebelarm, der an der Sicherheitstrennvorrichtung angeordnet ist. Bei einer Bewegung des Kessels aktiviert der Auslöser die Sicherheitstrennvorrichtung derart, dass die Sicherheitstrennvorrichtung die Fluidleitung so auftrennt, dass deren Verbindung zum Kessel getrennt ist. Vorzugsweise ist bei einer aktivierten Sicherheitstrennvorrichtung die Fluidleitung von der Kesselfluidzuführung getrennt. Bevorzugt wird die Kraft durch eine Relativbewegung zwischen dem Kessel und dem Verladearm erzeugt. Beispielsweise wird die Kraft in dem Auslöser erzeugt, vorzugsweise durch die Relativbewegung.

In einer Ausgestaltung ist der Auslöser mit einem zur Fluidverladevorrichtung raumfesten Befestigungspunkt verbunden. Weiterhin kann der Auslöser in einer Ausgestaltung eine Zugkraft an der Sicherheitstrennvorrichtung erzeugen, bevorzugt entgegengesetzt zur Bewegung des Kessels zum Auslösen der Sicherheitstrennvorrichtung. Beispielsweise weist der Auslöser einen Hebelarm auf, welcher mit der Sicherheitstrennvorrichtung befestigt ist. Der Hebelarm kann zum Beispiel über einen Klemmring an der Sicherheitstrennvorrichtung befestigt sein. Insbesondere ist der Auslöser an einem Punkt mit der Sicherheitstrennvorrichtung verbunden und andererseits an einem zweiten Punkt mit dem raumsfesten Befestigungspunkt verbunden. Insbesondere ist dieser Befestigungspunkt raumfest in Bezug auf alle möglichen Bewegungen des Kessels. Durch die Bewegung des Kessels kann insbesondere eine Dehnung des Auslösers erfolgen. Die Dehnung bewirkt in einer bevorzugten Ausführung eine Zugkraft an der Sicherheitstrennvorrichtung. Insbesondere ist diese Zugkraft entgegengesetzt zur Bewegung des Kessels gerichtet. In einer weiteren Ausführungsform ist die Zugkraft umgelenkt. Insbesondere kann eine Umlenkung der Zugkraft durch einen zweiten Befestigungspunkt erfolgen. Dieser zweite Befestigungspunkt kann raumfest und beweglich gegenüber dem Kessel angeordnet sein. In einer weiteren Ausführungsform ist der zweite Befestigungspunkt fest gegenüber dem Kessel. Insbesondere bewirkt eine Bewegung des Kessels eine lineare Bewegung an einem Punkt des Auslösers gegenüber dem raumfesten Befestigungspunkt. Die Zugkraft kann bevorzugt an einer runden Kupplungsvorrichtung der Sicherheitstrennvorrichtung angreifen und insbesondere eine Drehbewegung der Kupplungsvorrichtung bzw. eines Teils der Kupplungsvorrichtung bewirken. Insbesondere bewirkt eine Zugkraft eine Drehbewegung zumindest eines Teils der Sicherheitstrennvorrichtung, so dass dadurch diese aktiviert wird.

In einer Weiterbildung ist der Auslöser derart ausgeführt, dass er sowohl bei einer ersten Bewegung des Kessels als auch bei einer zweiten zur ersten entgegengesetzt orientierten Bewegung des Kessels die Sicherheitstrennvorrichtung aktiviert. Insbesondere kann die Sicherheitstrennvorrichtung durch eine Drehbewegung in eine erste Richtung aktiviert werden und in eine zweite Drehrichtung, welche entgegengesetzt zur ersten Drehrichtung orientiert ist. Insbesondere aktiviert der Auslöser bei einer Vorwärtsbewegung als auch bei einer Rückwärtsbewegung des Kessels die Sicherheitstrennvorrichtung. In einer speziellen Ausführungsform ist für die Sicherheitstrennvorrichtung ein Bajonettverschluss vorgesehen. Dieser Bajonettverschluss ist in einer Ruheposition geschlossen und zumindest in einer, bevorzugt in zumindest zwei von der Ruheposition verschiedenen Positionen geöffnet. Insbesondere bewirkt ein geöffneter Bajonettverschluss eine Auftrennung der Fluidleitung. Neben einem Bajonettverschluss kann auch ein andere Verschlussart genutzt werden, zum Beispiel ein Drehverschluss. Auch kann eine andere Art der Sicherung vorgesehen sein, beispielsweise eine Stiftsicherung. Durch die Kraft kann der Sicherungsstift entfernt werden und die Sicherheitstrennvorrichtung wird aktiviert.

In einer weiteren Ausführungsform ist der Auslöser an einem Schutzkorb angeordnet. Der Schutzkorb kann an einem raumfesten Punkt gegenüber dem Kessel angeordnet sein. Beispielsweise bewirkt eine Bewegung des Kessels relativ zu dem Schutzkorb das Auslösen des Auslösers und aktiviert die Sicherheitstrennvorrichtung. Auch kann an dem Schutzkorb eine Leiter angeordnet sein. Der Schutzkorb ist vorzugsweise schwenkbar gegenüber dem Kessel gelagert. Insbesondere kann der Schutzkorb in einer Bewegung von oben nach unten zum Kessel bewegt werden. Eine spezielle Ausführungsform sieht einen Schutzkorb vor, welcher sich oberhalb von einem Eisenbahnwagon befindet. Insbesondere weist der Schutzkorb mindestens zwei voneinander verschiedene Positionen auf, wobei die erste Position eine Position in der Nähe des Kessels ist, von der manuell die Ankopplungsvorrichtung und/oder die Sicherheitstrennvorrichtung betätigt werden kann. Die zweite Position des Sicherheitskorbes ist bevorzugt eine Position mit einem Abstand von mindestens einem Meter von dem Kessel.

Eine weitere Ausgestaltung sieht vor, dass der Auslöser eine Kette ist. Beispielsweise kann der Auslöser ein elastisches Material aufweisen. So kann der Auslöser zum Beispiel eine elastisches Band oder ein Seil sein. Eine nicht komplett gespannte Kette oder auch ein elastisches Material bewirkt ein verzögerndes Bewegen eines Punktes, welcher fest mit der Sicherheitstrennvorrichtung verbunden ist gegenüber dem raumfesten Befestigungspunkt, mit dem der Auslöser verbunden ist. Diese verzögernde Bewegung kann kleine Bewegungen des Kessels, die zum Beispiel durch Windschwankungen um den Kessel herum verursacht werden, kompensieren, wobei die Sicherheitstrennvorrichtung bei einer solchen Bewegung noch nicht aktiviert wird. In einer vorteilhaften Ausgestaltung ist die Kette verstellbar. Insbesondere kann die Durchhängung der Kette eingestellt werden.

Beispielsweise kann eine Sicherung vorgesehen sein, die ein unbeabsichtigtes Aktivieren der Sicherheitstrennvorrichtung verhindert. Die Sicherung ist beispielsweise bevorzugt zusätzlich zu einem Verschluss der Sicherheitstrennvorrichtung vorgesehen, wie beispielweise einem Bajonettverschluss. Zum Beispiel kann hierfür ein Scherstift vorgesehen sein, der zwei miteinander zu koppelnden Hälften der Sicherheitstrennvorrichtung sichert. Erst wenn eine Kraft durch den Auslöser auf die Sicherheitstrennvorrichtung aufgeprägt wird, führt dieses zum Abscheren des Scherstifts und einer Trennung und Aktivierung der Sicherheitstrennvorrichtung.

Eine Ausgestaltung sieht vor, dass die Kraft, die auf bzw. mittels des Auslösers auf die Sicherheitstrennvorrichtung aufgeprägt wird, konstant und/oder sich ändernd, bevorzugt ansteigend ist. Ein Ansteigen der Kraft kann beispielsweise monoton steigend erfolgen. Der Anstieg kann geradlinig wie auch exponentiell oder auch in anderer Weise erfolgen, beispielsweise einer Treppenfunktion folgend. Über die Zeit betrachtet, kann die Kraft bevorzugt in einem Zeitabschnitt konstant sein, in einem anderen Zeitabschnitt ansteigend.

In einer Weiterbildung ist vorgesehen, dass die Sicherheitstrennvorrichtung einen Spülkanal zur Spülung der Sicherheitstrennvorrichtung mit einem Gas aufweist. Insbesondere ist eine Spülung mit Stickstoff vorgesehen. Das Stickstoffgas wird bevorzugt außerhalb entlang der Abdichtungen der Sicherheitstrennvorrichtung geleitet. In einer vorteilhaften Ausgestaltung weist die Ankopplungsvorrichtung einen Eingang zum Einführen des Stickstoffes und einen Ausgang zur Entnahme des Stickstoffes und den Reaktionsgasen, welche durch die Reaktion des Stickstoffs mit dem zu transportierendem Fluid gebildet werden, auf. In einer besonderen Ausführungsform ist ein Spülsystem, welches mindestens einen Spülkanal aufweist, durch die Aktivierung der Sicherheitstrennvorrichtung beeinflusst. Diese Beeinflussung kann derart erfolgen, dass eine Freigabe von mindestens einem Spülkanal erfolgt, wobei eine gespeicherte Menge an Gas freigegeben wird. Bevorzugt erfolgt diese Freigabe mittels einer vorgespannten Feder, welche über die Aktivierung der Sicherheitstrennvorrichtung gelöst wird. Das Ausschieben der gespeicherten Menge von Gas bewirkt ein Verteilen dieser Menge des Gases in einer Umgebung um die voneinander getrennten Fluidleitungen, insbesondere die Fluidleitung und die Kesselfluidzuführung.

In einer Weiterbildung ist vorgesehen, dass die Sicherheitstrennvorrichtung oberhalb des Kessels angeordnet ist. Eine Fluidverladung erfolgt bei dieser Ausführungsform vor allem von einem Verladearm, welcher oberhalb des Kessels angeordnet ist hinein in den Kessel nach unten.

In einer Weiterbildung ist eine Fluidverladevorrichtung vorgesehen, wobei der Auslöser eine Umwandlung einer nahezu linearen Bewegung des Kessels in eine Drehbewegung der Sicherheitstrennvorrichtung ermöglicht. Hierbei ist der Auslöser insbesondere derart angeordnet, dass eine Bewegung des Kessels in linearer Art und Weise eine tangentiale Zugkraft an der Sicherheitstrennvorrichtung bewirkt. Diese tangentiale Zugkraft bewirkt eine Drehbewegung der Sicherheitsvorrichtung.

Durch die Systemelemente und das umfangreiche Zubehör kann das Landverladerprogramm TERRA der Anmelderin bei der vorgeschlagenen Fluidverladevorrichtung zum Einsatz gelangen:
- Gewichtsausgleich durch Gegengewicht oder Federkraftzylinder
- Pneumatische oder hydraulische Betätigung des Verladearms
- Unterschiedliche Anschlussarten und -kupplungen
- Absaughaube in verschiedenen Ausführungen
- Feste oder Teleskop-Fallrohre
- Überfüll- und Anflanschsicherungen
- Ventile, Armaturen und Prozessanschlüsse
- Prozesssensorik wie Überwachungen, Rückmeldungen und Signalisierungen
- Verladebühnen mit und ohne Zwischenpodest
- Klapptreppen und Schutzkörbe, gewichtsausgeglichen und/oder hydraulisch bzw. pneumatisch betätigt

Des Weiteren können mit der Fluidverladevorrichtung flüssige wie auch gasförmige Fluide wie zum Beispiel Aluminiumalkyl, Chlor, Säuren, Laugen, Flüssiggase wie LNG oder auch Bitumen und Schwefel verladen werden. Es können Nennweiten von DN 25 bis DN 250 sowie Einsatztemperaturen von -196°C bis +250°C des Fluids angewendet werden. Auch kann das Fluid unter Druck stehen, beispielsweise unter einem Druck bis zu 50 bar. Unterschiedliche Werkstoffe und Dichtungsmaterialien sind einsetzbar. Bei Bedarf kann die Verladevorrichtung mit einer Auskleidung oder auch einer Beheizung und Isolierung ausgerüstet sein.

Des Weiteren wird ein Verfahren vorgeschlagen zum Auftrennen einer Fluidleitung eines Verladearms von einem transportablen, bewegbar angeordneten Kessel mittels einer in der Fluidleitung angeordneten Sicherheitstrennvorrichtung. Bei diesem Verfahren wird beim Auftrennen die Fluidleitung verschlossen und es erfolgt ein Auftrennen der Sicherheitstrennvorrichtung durch eine Bewegung des Kessels.

In einer weiteren Ausgestaltung ist ein Verfahren vorgesehen, bei welchem sich nach dem Auftrennen ein Teil der getrennten Sicherheitstrenneinrichtung mit der abgetrennten Fluidleitung aufgrund sich einer dadurch veränderten Gewichtsverlagerung am Verladearm sich vom Kessel entfernt. Bevorzugt entfernt sich dieser Teil der getrennten Sicherheitstrenneinrichtung jedoch nur bis zum Erreichen einer Wegbegrenzung.

Eine weitere Ausgestaltung sieht vor, dass nach einem Auslösen der Sicherheitstrennvorrichtung ein Teil davon mit der Fluidleitung durch den Verladearm nach oben soweit weggeschwenkt wird, dass der unterste Teil über ein Sicherheitsgeländer hinausgeschwenkt wird und oberhalb dessen zur Ruhe kommt, vorzugsweise durch eine Wegbeschränkung. So kann beispielweise das Sicherheitsgeländer eine Höhe von bis zu 1,3 Meter aufweisen, der unterste Teil schwenkt sodann auf eine Höhe von mindestens 1,4 Meter, bevorzugt bis 1,5 Meter. Durch die Höhen- bzw. Wegbeschränkung wird verhindert, dass eine Person im Kopfbereich beispielweise mit einem abgetrennten Teil der Sicherheitstrennvorrichtung kollidiert, vorausgesetzt, dass die Person zum Zeitpunkt der Aktivierung steht.

Weitere vorteilhafte Ausgestaltungen und Weiterbildungen gehen aus den nachfolgenden Figuren hervor. Die folgenden Figuren zeigen ein Ausführungsbeispiel einer Fluidverladevorrichtung. Die aus den einzelnen Figuren hervorgehenden Einzelheiten und Merkmale sind jedoch nicht auf diese jeweilige Figur beschränkt. Vielmehr können ein oder mehr Merkmale mit einem oder mehr Merkmalen aus verschiedenen Figuren wie auch mit aus der obigen Beschreibung hervorgehenden Merkmalen zu neuen Ausgestaltungen verknüpft werden. Insbesondere dienen die nachfolgenden Ausführungen nicht als Beschränkungen des jeweiligen Schutzbereiches, sondern erläutern die einzelnen Merkmale sowie ihr mögliches Zusammenwirken untereinander. Es zeigen:
- Figur 1: eine Fluidverladevorrichtung in einer Seitenansicht,
- Figur 2: eine perspektivische Ansicht der Sicherheitstrennvorrichtung von außen in einer ersten Position,
- Figur 3: eine perspektivische Ansicht der Sicherheitstrennvorrichtung in einer zweiten Po sition,
- Figur 4: eine perspektivische Ansicht der Sicherheitstrennvorrichtung in einer dritten Position,
- Figur 5: eine Aufsicht auf einen Bajonettverschluss der Sicherheitstrennvorrichtung,
- Figur 6: ein Schnittbild einer Sicherheitstrennvorrichtung,
- Figur 7: eine Fluidverladevorrichtung mit zwei Sicherheitstrennvorrichtungen in einer Seitenansicht,
- Figur 8: eine perspektivische Ansicht einer Sicherheitstrennvorrichtung in einem ersten zusammengebauten Zustand,
- Figur 9: eine perspektivische Ansicht einer Sicherheitstrennvorrichtung in einem zweiten zusammengebauten Zustand,
- Figur 10: eine perspektivische Ansicht einer Sicherheitstrennvorrichtung in einem dritten zusammengebauten Zustand,
- Figur 11: eine perspektivische Ansicht einer Sicherheitstrennvorrichtung in einem vierten zusammengebauten Zustand,
- Figur 12: eine perspektivische Ansicht einer Sicherheitstrennvorrichtung in einem fünften zusammengebauten Zustand,
- Figur 13: eine perspektivische Ansicht einer Sicherheitstrennvorrichtung in einem sechsten zusammengebauten Zustand,
- Figur 14: eine perspektivische Ansicht einer Sicherheitstrennvorrichtung in einem siebten zusammengebauten Zustand,
- Figur 15: eine perspektivische Ansicht einer Sicherheitstrennvorrichtung in einem achten zusammengebauten Zustand,

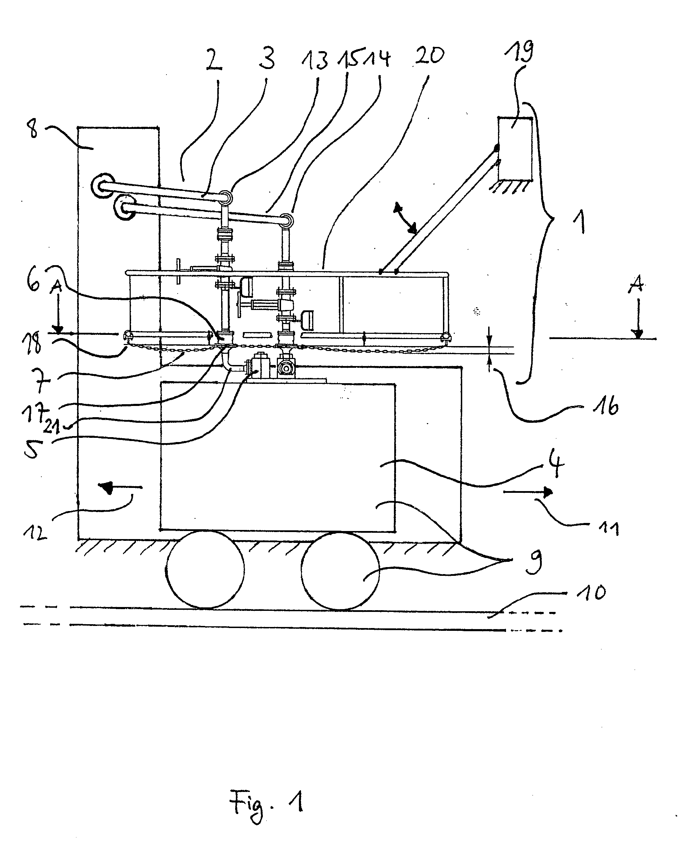

Figur 1 zeigt eine Fluidverladevorrichtung 1 in einer Seitenansicht. Die Fluidverladevorrichtung 1 weist einen Verladearm 2 auf. In diesem Fluidverladearm 2 ist eine Fluidleitung 3 integriert. Des Weiteren zeigt Figur 1 einen Kessel 4, eine Ankopplungsvorrichtung 5, eine Sicherheitstrennvorrichtung 6 und einen mechanisch wirkenden Auslöser 7. Die Fluidleitung 3 verbindet einen Behälter 8 mit dem Kessel 4, wenn die Ankopplungsvorrichtung 5 geschlossen ist. In einer beispielhaften Ausgestaltung koppelt die Ankopplungsvorrichtung die Kesselfluidzuführung 21 mit dem Kessel. Insbesondere ist die Sicherheitstrennvorrichtung 6 beim Verladen des zu transportierenden Fluids in einem passiven Zustand, insbesondere wenn sich der Kessel in einer Ruhestellung befindet. Im passiven Zustand leitet die Sicherheitstrennvorrichtung 6 ein Fluid durch die Sicherheitstrennvorrichtung 6 durch. Im aktiven Zustand sperrt die Sicherheitstrennvorrichtung 6 einen Fluidstrom durch diese. In der in Figur 1 dargestellten Ausführungsform ist der Kessel 4 beweglich auf einem Eisenbahnwagon 9 angeordnet. Dieser ist auf Schienen 10 positioniert. Der Kessel ist in Pfeilrichtung 11 beweglich. Der Kessel kann auch in Pfeilrichtung 12 bewegt werden. Kleine Bewegungen des Kessels 4, welche zum Beispiel durch Windstöße verursacht werden, können durch das erste Ausgleichsgelenk 13 und das zweite Ausgleichsgelenk 14 des ersten Verladearms 2 bzw. eines zweiten Verladearms 15 ausgeglichen werden. Eine Durchhängung 16, insbesondere von ungefähr 5 cm, des Auslösers 7 bewirkt, dass eine kleine Bewegung des Kessels 4 in die Richtung 11 bzw. Richtung 12 nur eine sehr geringe erste Zugkraft an der Sicherheitstrennvorrichtung 6 über den Auslöser 7 erzeugt, welche die Sicherheitstrennvorrichtung nicht auslösen kann. Gegenüber anderen Anwendungen, bei welchen ein Auslöser zum Beispiel in Form einer gespannten Kette oder eines gespannten Seils fest gespannt ist, bewirkt die Durchhängung 16 eine verzögerte Auslösung einer Zugkraft an der Sicherheitstrennvorrichtung 6, wenn der Kessel in die Richtung 11 oder in die Richtung 12 bewegt wird. Gleiches kann auch beispielweise über eine Feder geschaffen werden, die mitverspannt wird im Auslöser.

Eine Zugkraft, welche durch den Auslöser 7 an der Sicherheitstrennvorrichtung 6 erzeugt wird, entsteht bevorzugt durch eine Dehnung des Auslösers. Die Dehnung wird bevorzugt durch die Bewegung eines ersten Endes 17 des Auslösers 7, welches fest an der Sicherheitstrennvorrichtung 6 angeordnet ist, gegenüber einer Befestigung 18 des Auslösers 7 an einem raumfesten Punkt 19 bewirkt. Vorzugsweise erfolgt die Befestigung des Punktes 18 an dem raumfesten Punkt 19 über einen Schutzkorb 20. Der Schutzkorb 20 kann höhenverstellbar sein. Bei der Beladung des Kessels 4 mit einem Fluid ist der Schutzkorb 20 fest mit dem raumfesten Punkt 19 verbunden und ist nicht beweglich. Vorzugsweise weist der Schutzkorb 20 eine Befestigungsvorrichtung auf, welche eine feste nicht bewegliche Verbindung mit dem raumfesten Punkt 19 ermöglicht.

Wird der Kessel 4 zum Beispiel durch einen sehr starken Windstoß so stark in die Richtung 11 oder in die Richtung 12 bewegt, dass der Auslöser 7 sich spannt, sodass zum Beispiel eine Durchhängung 16 von annähernd 0,5 cm oder weniger erreicht wird, entsteht eine zweite Zugkraft an der Sicherheitstrennvorrichtung 6, welche deutlich höher als die erste Zugkraft ist. Bevorzugt ist die zweite Zugkraft zehn bis zwanzig Mal in einer besonderen Ausführung auch hundert Mal höher als die erste Zugkraft. Insbesondere bewirkt die erste Zugkraft keine Verdrehung der Sicherheitstrennvorrichtung 6. In dieser Ausführungsform bewirkt die zweite Zugkraft eine Drehung der Sicherheitstrennvorrichtung 6. Insbesondere bewirkt die zweite Zugkraft eine Drehung der Sicherheitstrennvorrichtung 6 in einer Ebene A-A, welche senkrecht zur Bildebene der Figur 1 ausgerichtet ist. Die Drehachse der Sicherheitstrennvorrichtung 6 ist dabei senkrecht zur Ebene A-A angeordnet.

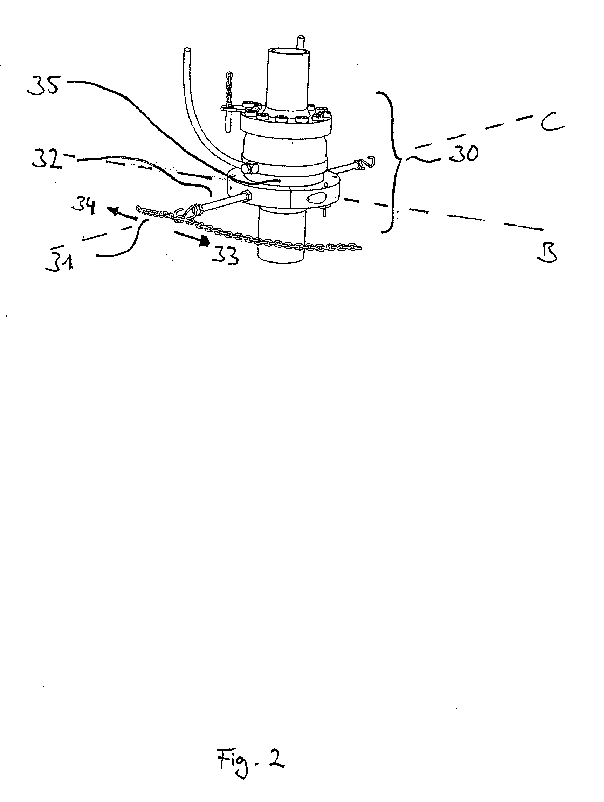

Figur 2 zeigt eine perspektivische Ansicht der Sicherheitstrennvorrichtung 30 von außen in einer ersten Position. Insbesondere ist ein erstes Drehteil 35 der Sicherheitstrennvorrichtung 30 drehbar. Die Drehachse des Drehteils 35 ist senkrecht zu einer Ebene angeordnet, welche durch die gestrichelten Linien B und C aufgespannt wird. In einer besonderen Ausführungsform ist diese Drehebene parallel zur Ebene A-A, welche in Figur 1 eingezeichnet ist. In der in Figur 2 gezeigten Ausführungsform ist das Drehteil 35 über einen Hebelarm 32 mit einem Auslöser 31 verbunden. Bevorzugt ist der Auslöser 31 in Form einer Kette ausgeführt. Insbesondere kann der Auslöser 31 eine Zugkraft einerseits in Richtung 33 und andererseits auch in Richtung 34 am Hebelarm 32 bewirken.

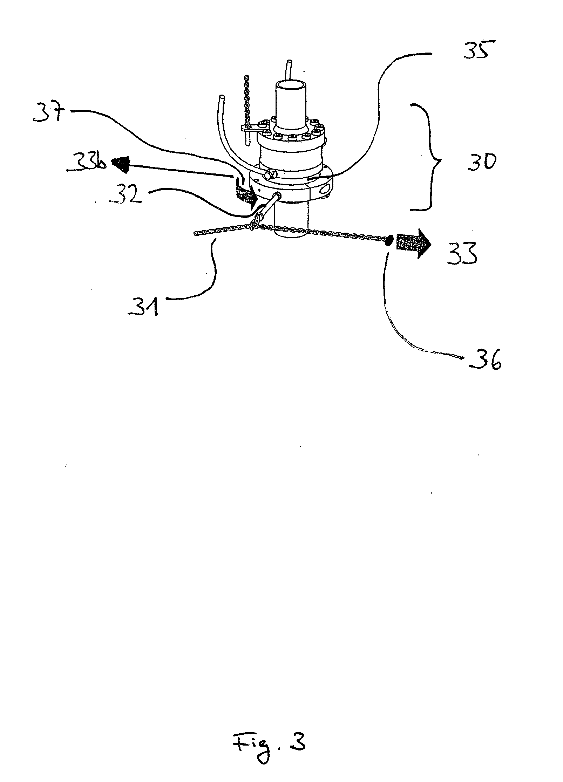

Figur 3 zeigt eine perspektivische Ansicht der Sicherheitstrennvorrichtung 30 in einer zweiten Position. Im Unterschied zur ersten Position der Sicherheitstrennvorrichtung 30, bei der die Sicherheitstrennvorrichtung 30 in einem Ruhezustand sich befand, wird in der Figur 3 dargestellten zweiten Position diese Sicherheitstrennvorrichtung 30 in die Richtung 32 bewegt. Ein Ende des Auslösers 31 ist an einem raumfesten Befestigungspunkt 36 befestigt. Durch die Bewegung der Sicherheitstrennvorrichtung 30 in die Richtung 33b wird der Auslöser 31 über den Hebelarm 32 in die Bewegungsrichtung 33b gezogen. Dabei wird der Auslöser 31 gedehnt und der Auslöser 31 erzeugt eine Zugkraft in Richtung 33 an dem Hebelarm 32. Bevorzugt bewirkt diese Zugkraft an dem Hebelarm 32 eine Drehung des Drehteils 35 der Sicherheitstrennvorrichtung 30 in eine Richtung 37.

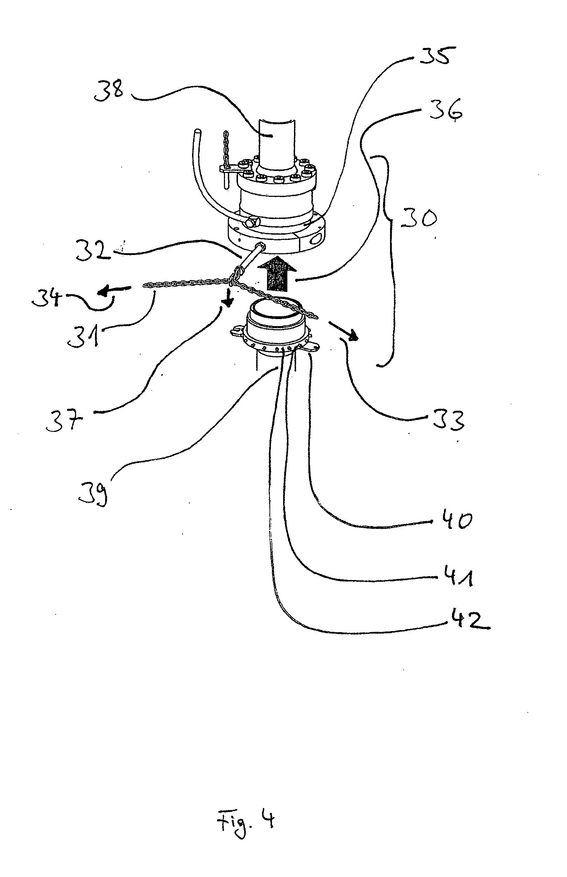

Figur 4 zeigt eine perspektivische Ansicht der Sicherheitstrennvorrichtung 30 in einer dritten Position. Diese dritte Position wird insbesondere durch eine Drehung in Richtung 37 der Sicherheitstrennvorrichtung 30 wie sie in Figur 3 dargestellt ist erreicht. In dieser dritten Position wird die Sicherheitstrennvorrichtung 30 aktiviert. Die Aktivierung der Sicherheitstrennvorrichtung öffnet bevorzugt eine Verklemmung zwischen der Fluidleitung 38 und der Kesselfluidzuführung 39. Insbesondere bewirkt ein Öffnen einer solchen Verklemmung und/oder Befestigung ein Auseinanderbewegen der Sicherheitstrennvorrichtung 30. In einer vorteilhaften Ausgestaltung weist die Sicherheitstrennvorrichtung 30 ein Drehteil 35 auf, welches fest mit der Fluidleitung 38 verbunden ist und ein zweites Teil 40 auf, welches fest mit der Kesselfuidleitung 39 verbunden ist. Das zweite Teil 40 kann beispielsweise einen Teil eines Bajonettverschlusses sein. Ein solcher Bajonettverschluss weist bevorzugt Erhebungen 41 gegenüber einer ringförmigen Fläche 42 auf. In einer besonderen Ausgestaltung ist das Drehteil 35 der Sicherheitstrennvorrichtung 30 an einem Verladearm derart gekoppelt, dass bei einer Aktivierung der Sicherheitstrennvorrichtung 30 über eine Aktivierungskraft das Drehteil 35 angehoben wird und sich in Richtung 36 bewegt. Die Aktivierungskraft kann insbesondere durch ein Austarieren des Verladearms bei passivem Zustand der Sicherheitstrennvorrichtung annähernd Null betragen, während bei aktivem Zustand der Sicherheitstrennvorrichtung die Aktivierungskraft deutlich über 100 Newton beträgt. In einer weiteren vorteilhaften Ausgestaltung wird bei dieser Bewegung des Drehteils 35 in Richtung 36 eine Zugkraft in Richtung 34 und eine zweite Zugkraft in Richtung 33 am Auslöser 31 erzeugt. Diese Zugkräfte 33 und 34 bewirken eine resultierende Zugkraft 37 entgegengesetzt der Bewegungsrichtung 36 des Drehteils 35, welche die Aufwärtsbewegung des Drehteils 35 abbremst. Bevorzugt bewirkt dieses abbremsen des Drehteils 35 auch ein Abbremsen eines Verladearms.

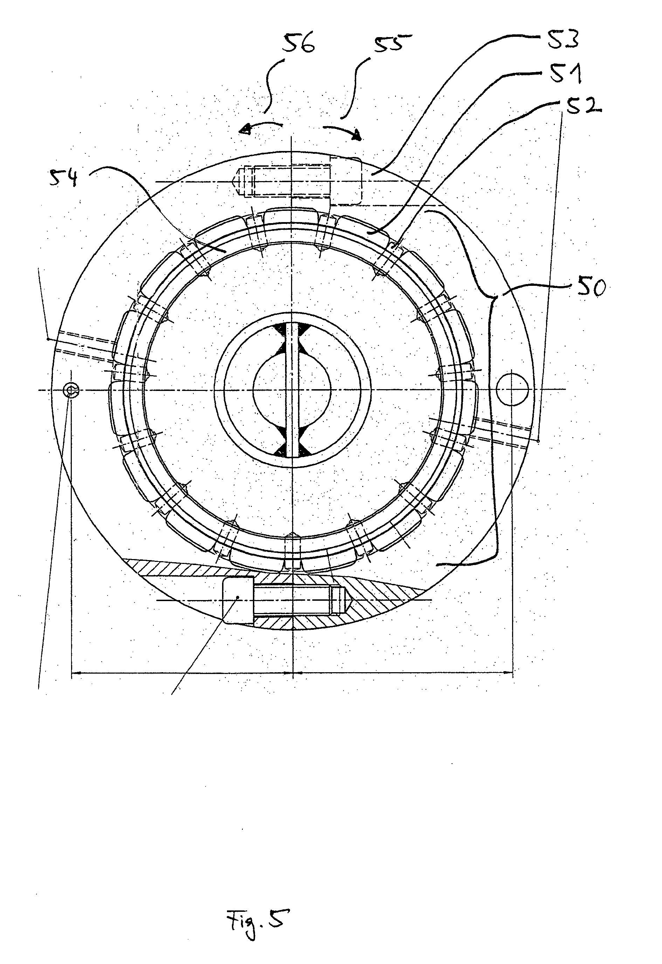

Figur 5 zeigt eine Draufsicht eines Bajonettverschlusses 50. Der Bajonettverschluss 50 kann ein erstes Teil 54 gegenüber dem einem zweiten Teil 53 verschließen. In der in Figur 5 dargestellten Ansicht ist der Bajonettverschluss 50 geöffnet. Bei geöffneten Bajonettverschluss 50 können die Stifte 52 des ersten Teils 54 sich aus der Bildebene der Figur 5 von den Abstützkanten 51, welche fest an dem zweiten Teil 53 befestigt sind wegbewegen. In einer ersten Ausführungsform kann das Teil 53 mit seinen Abstützkanten 51 gegenüber dem ersten Teil 54 in sowohl Richtung 55 als auch in Richtung 56 gedreht werden. Befinden sich die Abstützkanten 51 in der Bildebene der Figur 5 betrachtet vor den Stiften 52 des ersten Teils 54, so ist der Bajonettverschluss 50 geschlossen. Bei geschlossenem Bajonettverschluss 50 ist eine Bewegung des ersten Teils 54 gegenüber dem zweiten Teil 53 in eine Richtung aus der Bildebene hinaus oder hinein blockiert. In einer bevorzugten Ausführungsform bewirkt eine Drehung des Drehteils 35 in Richtung 37, wie sie in Figur 3 dargestellt ist, ein Öffnen des Bajonettverschlusses 50. Durch den geöffneten Bajonettverschluss 50 kann eine Bewegung des Drehteils 35 der Sicherheitstrennvorrichtung 30 in eine Richtung 36, wie sie in Figur 4 dargestellt ist, ermöglicht werden.

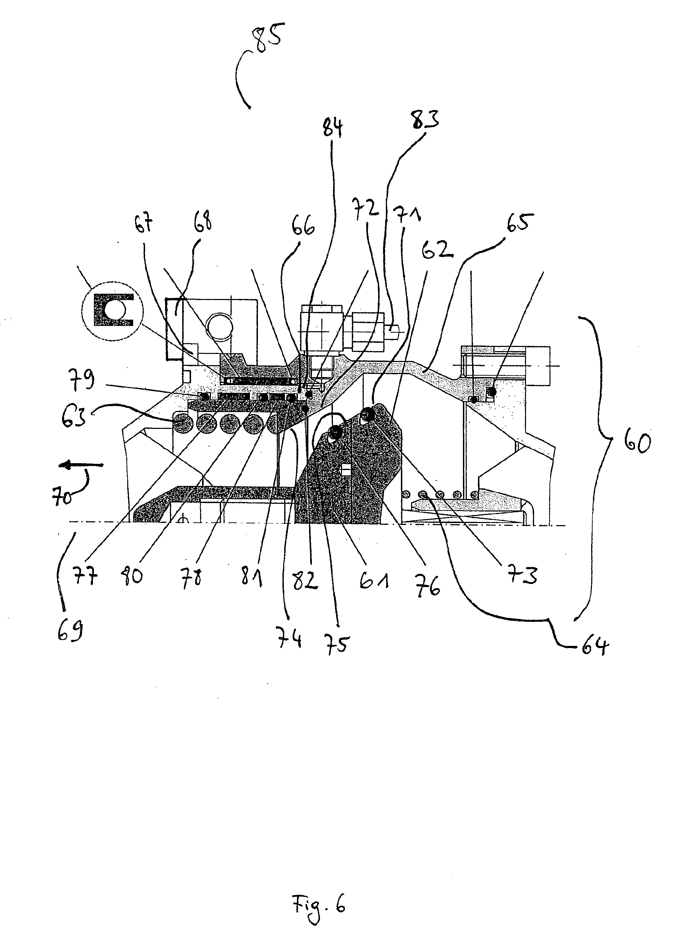

Figur 6 zeigt ein Schnittbild einer Sicherheitstrennvorrichtung 60. In dieser Ausführungsform weist die Sicherheitstrennvorrichtung 60 einen ersten Stempel 61 und einen zweiten Stempel 62 auf. Bevorzugterweise sind die Stempel 61 und 62 über eine Federkraft gegeneinander verpresst. Die Federkraft ist bevorzugt mithilfe von zwei Federn bewirkt. In der dargestellten Ausführungsform nach Figur 6 ist der Stempel 61 gegen eine Feder 63 gepresst und der Stempel 62 gegen eine Feder 64 gepresst. Die Federkraft, welche durch die Federkräfte der Feder 64 und der Feder 63 erzeugt wird, bewirkt einerseits ein Verpressen des ersten Stempels 61 gegenüber dem zweiten Stempel 62 aber auch ein auseinanderdrücken des ersten Teils der Sicherheitstrennvorrichtung 66 gegenüber dem zweiten Teil der Sicherheitstrennvorrichtung 65. Ein Auseinanderbewegen des ersten Teils 65 gegenüber dem zweiten Teil 66 der Sicherheitstrennvorrichtung 60 ist durch einen geschlossenen Bajonettverschluss verhindert. Ein geschlossener Bajonettverschluss entspricht einer passiven Stellung der Sicherheitstrennvorrichtung 60. Bei geschlossenem Bajonettverschluss ist mindestens ein Stift 67 gegen eine Abstützkante 68 gedrückt. Ein Stift 67 ist fest mit dem drehenden ersten Teil 66 der Sicherheitstrennvorrichtung verbunden. Eine Drehung des drehenden ersten Teils 66 gegenüber dem zweiten Teil 65 um eine Drehachse 69 bewirkt eine Verschiebung des Stiftes 67 gegenüber der Abstützkante 68 des Bajonettverschlusses. Nach einer Drehung um einen bestimmten Winkelbereich, bevorzugt ein Winkelbereicht zwischen 5 und 10 Grad, erreicht der Stift 67 einen Bereich, in welchem er nicht von einer Abstützkante 68 gehalten wird. Eine solche Position des Stiftes 67 gegenüber einer Abstützkante 68 ist in Figur 5 durch den dort gezeigten Bajonettverschluss 50 mit seinen Stiften 52 und der Abstützkante 51 dargestellt. Ist der Stift 67 gegenüber der Abstützkante 68 nicht mehr abgestützt, wird das erste Teil 66 des Sicherheitstrennverschlusses 60 über eine Federkraft, welche durch die Vorspannung der Feder 63 und auch der Feder 64 erzeugt wird, in eine Richtung 70 gegenüber dem zweiten Teil 65 der Sicherheitstrennvorrichtung beschleunigt. Durch die Bewegung der ersten Teils 66 des Sicherheitstrennverschlusses 60 in die Richtung 70 wird der Stempel 62 über die Federkraft der vorgespannten Feder 64 in Richtung 70 gegenüber dem zweiten Teil 65 der Sicherheitstrennvorrichtung 60 bewegt. Die Bewegung des Stempels 62 erfolgt solange bis eine Kante 71 des Stempels 62 an die Kante 72 des zweiten Teils 65 stößt und an dieser mithilfe einer Federkraft, welche über die an dieser Position immer noch vorgespannten Feder 64 gepresst wird. Über das Verpressen der Kante 62 an der Kante 72 ist das zweite Teil 65 der Sicherheitstrennvorrichtung 60 fluiddicht abgedichtet. Diese Abdichtung wird insbesondere durch einen O- ring 73 unterstützt.

In der Figur 6 dargestellten Ausführungsform wird bei aktivierter Sicherheitstrennvorrichtung 60 eine weiteren Abdichtkante 74 des ersten beweglichen Teils 66 der Sicherheitstrennvorrichtung 60 mithilfe der vorgespannten Feder 63 gegen eine Abdichtkante 75 des Stempels 61 gedrückt. Ein Verpressen der Abdichtkante 74 gegenüber der Abdichtkante 75 mithilfe der vorgespannten Feder 63 bewirkt ein Abdichten des ersten Teils 66 der Sicherheitstrennvorrichtung. Die fluiddichte Abdichtung des ersten Teils 66 wird über einen O- ring 76, welcher am Stempel angeordnet ist, unterstützt. In einer besonderen Ausführungsform dichtet eine Dichtungsmanschette 77 das erste Teil 66 gegenüber einem Austritt des zu transportierenden Fluides ab. In vorteilhafter Weise dichtet eine zweite Dichtungsmanschette 78 und auch weitere O- ringe 79, 80 und 81 das erste Teil 66 gegenüber einem Austreten des zu transportierenden Fluides ab. Die genannten Dichtungselemente 77, 78, 79, 80 und 81 können insbesondere bei einer Bewegung des Stempels 61 gegenüber dem ersten Teil 66 der Sicherheitstrennvorrichtung 60 ein Abdichten gegenüber einem Austreten des zu transportierendem Fluides bewirken. Dies ist insbesondere bei aktivierter Sicherheitstrennvorrichtung 60 der Fall. Bei passiver Sicherheitstrennvorrichtung 60, was einem geschlossenem Bajonettverschluss entspricht, wie er zum Beispiel in Figur 6 über die anliegenden Stifte 67 an der Abstützkante 68 dargestellt ist, ist eine Abdichtung der Sicherheitstrennvorrichtung 60 gegenüber einem Austreten des zu transportierendem Fluides mithilfe des O- rings 82 bewirkt.

In einer vorteilhaften Ausgestaltung weist die Sicherheitstrennvorrichtung 60 einen Eingang 83 zum Einführen eines Neutralisationsgases auf. Insbesondere kann das Neutralisationsgas Stickstoff sein. Das Neutralisationsgas wird über den Eingang 83 in einen Kanal 84 geleitet. Der Kanal 84 befindet sich bevorzugt in einem Abstand von der Drehachse 69, welcher größer als die jeweiligen Abstände der einzelnen Dichtungselemente wie zum Beispiel der O- ringe 79, 80 und 81 sowie der Dichtungsmanschetten 77 und 78, von der Drehachse 69 sind. Dadurch kann sicher gestellt werden, dass ein Austreten des Fluid bei passiver Sicherheitstrennvorrichtung 60 zuerst mit dem Neutralisationsgas in Berührung kommt, bevor es in die äußere Umgebung 85 gelangt. In vorteilhafter Weise wird in einem Kanal 84 das zu transportierende Fluid mit dem Neutralisationsgas neutralisiert. Zum Beispiel kann Chlor mithilfe eines Neutralisationsgas wie zum Beispiel Stickstoff neutralisiert werden. Andere Gase können zur Neutralisierung ebenfalls zum Einsatz gelangen, Ein Neutralisieren kann beispielsweise auch bedeuten, dass das Chlorgas ausreichend verdünnt wird, so dass keine gesundheitsschädliche Wirkung davon mehr ausgeht. Weitere Dichtungen 86 und 87 verhindern ein Austreten des Neutralisationsgases bei passiver Sicherheitstrennvorrichtung 60.

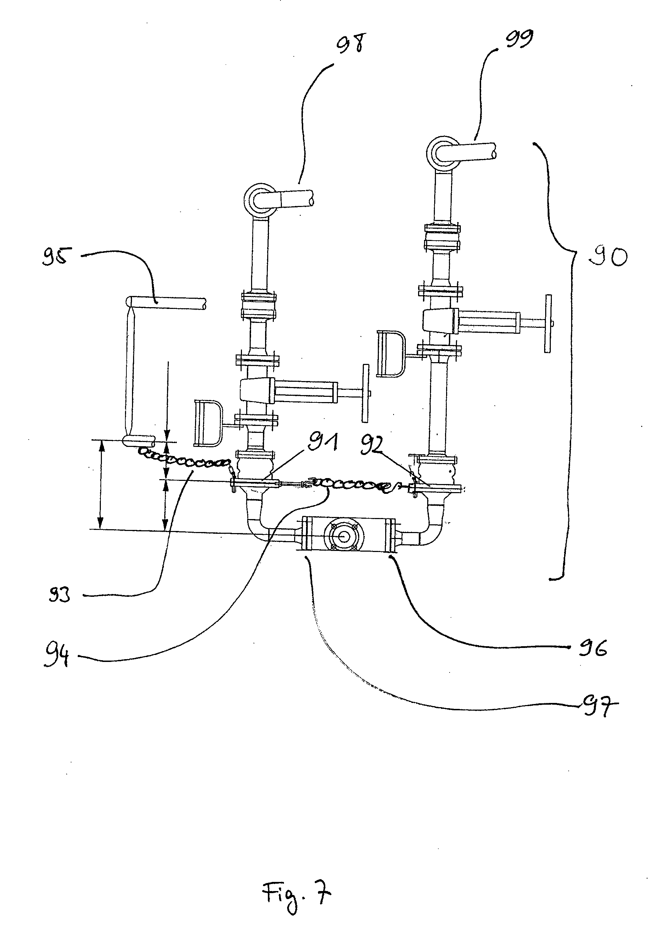

Fig. 7 zeigt eine Fluidverladevorrichtung 90 mit einer ersten Sicherheitstrennvorrichtung 91 und einer zweiten Sicherheitstrennvorrichtung 92. Bei dieser Ausgestaltung ist die Sicherheitstrennvorrichtung 92 mit Hilfe eines ersten Auslösers 94 mit der ersten Sicherheitstrennvorrichtung 91 verbunden. Die erste Sicherheitstrennvorrichtung 91 ist mit Hilfe eines zweiten Auslösers 93 an einen Sicherheitskorb 95 gekoppelt. Insbesondere weist der zweite Auslöser 93 während eines Verladens eines zu transportierenden Fluids eine Durchhängung auf. Vorteilhafterweise weist während des Verladens der erste Auslöser 94 keine Durchhängung oder nahezu keine Durchhängung auf. Die Durchhängung des zweiten Auslösers 93 kann eine verzögerte Aktivierung der Sicherheitstrennvorrichtung 91 bewirken. Die gegenüber dem zweiten Auslöser 93 vorliegende Durchhängung des ersten Auslösers 94 kann eine unmittelbare Aktivierung der zweiten Sicherheitstrennvorrichtung 92 nach der Aktivierung der ersten Sicherheitstrennvorrichtung 91 bewirken. Des Weiteren weist die in Fig. 7 gezeigte Fluidverladevorrichtung 90 eine erste Ankopplungsvorrichtung 96 und eine zweite Ankopplungsvorrichtung 97 auf. Des Weiteren weist die Fluidverladevorrichtung 90 einen ersten Verladearm 98 und eine zweiten Verladearm 99 auf. Die Ankopplungsvorrichtung 96 und 97 sind vorzugsweise fest mit einem zu befüllenden oder entleerenden Kessel verbunden.

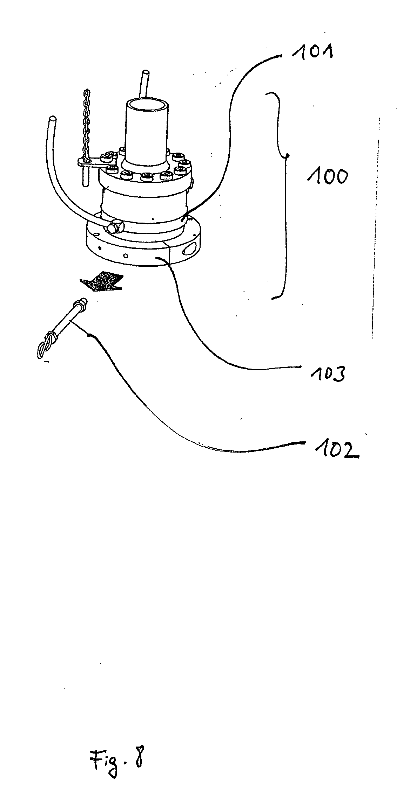

Fig. 8 zeigt eine perspektivische Ansicht einer Sicherheitstrennvorrichtung 100 in einem ersten zusammengebauten Zustand. Fig. 8 zeigt insbesondere einen ersten drehbaren Teil 101 der Sicherheitstrennvorrichtung 100. In dem dargestellten ersten zusammengebauten Zustand wird ein Hebelarm 102 von einem Klemmring 103 abmontiert.

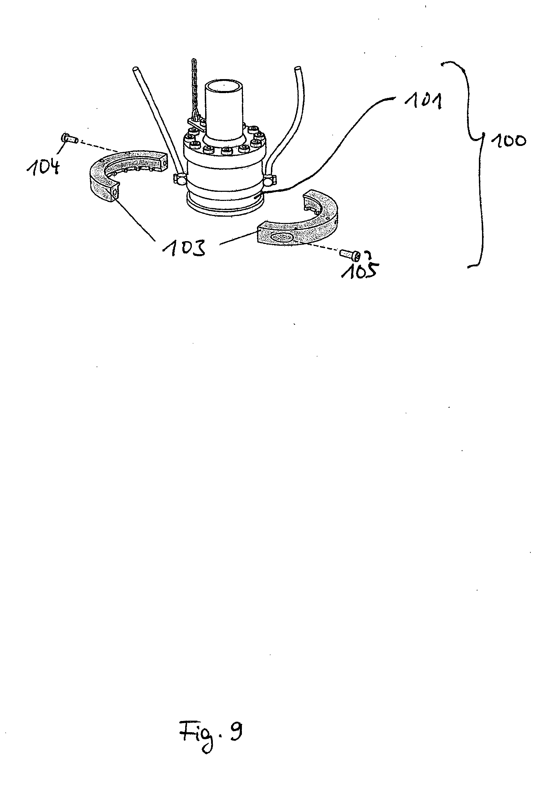

Fig. 9 zeigt eine perspektivische Ansicht der Sicherheitsvorrichtung 100 in einem zweiten zusammengebauten Zustand. In diesem zweiten Zustand wird der Klemmring 103 von dem drehbaren Teil 101 abmontiert. Insbesondere werden zwei Schrauben 104 und 105 des Klemmrings 193 gelöst.

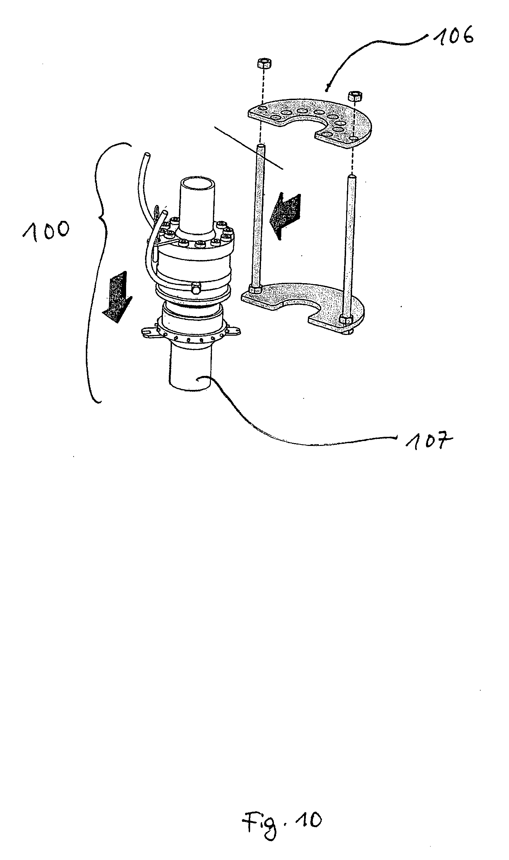

Fig. 10 zeigt eine perspektivische Ansicht der Sicherheitstrennvorrichtung 100 in einem dritten zusammengebauten Zustand. In diesem dritten Zustand wird eine Montagevorrichtung 106 an der Sicherheitstrennvorrichtung 100 befestigt. Mit Hilfe der Montagevorrichtung 106 wird ein zweiter Teil 107 der Sicherheitstrennvorrichtung, welcher gegen den ersten Teil der Sicherheitstrennvorrichtung 101 gepresst wird, festgehalten.

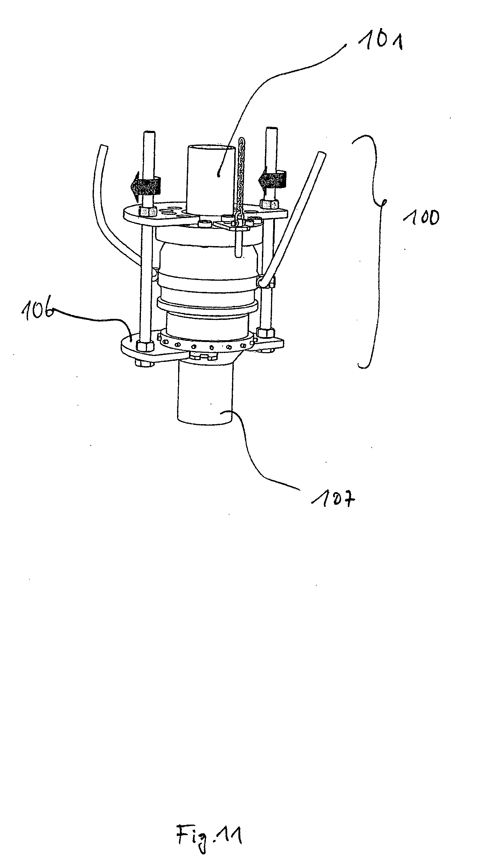

Fig. 11 zeigt eine perspektivische Ansicht der Sicherheitstrennvorrichtung 100 in einem vierten zusammengebauten Zustand. In diesem vierten Zustand werden Schrauben der Montagevorrichtung 106 derart festgedreht, dass die Montagevorrichtung 106 das erste Teil der Sicherheitstrennvorrichtung 101 gegenüber dem zweiten Teil 107 der Sicherheitstrennvorrichtung 100 zusammenhält.

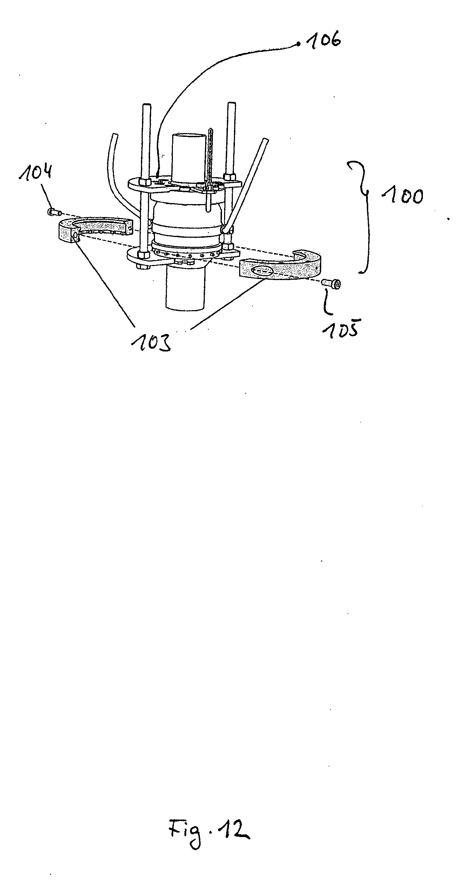

Fig. 12 zeigt eine perspektivische Ansicht der Sicherheitstrennvorrichtung 100 in einem fünften zusammengebauten Zustand. In diesem fünften zusammengebauten Zustand wird der Klemmring 103 mit Hilfe der Befestigungsschrauben 104 und 105 an den zweiten Teil 107 der Sicherheitstrennvorrichtung 100 befestigt.

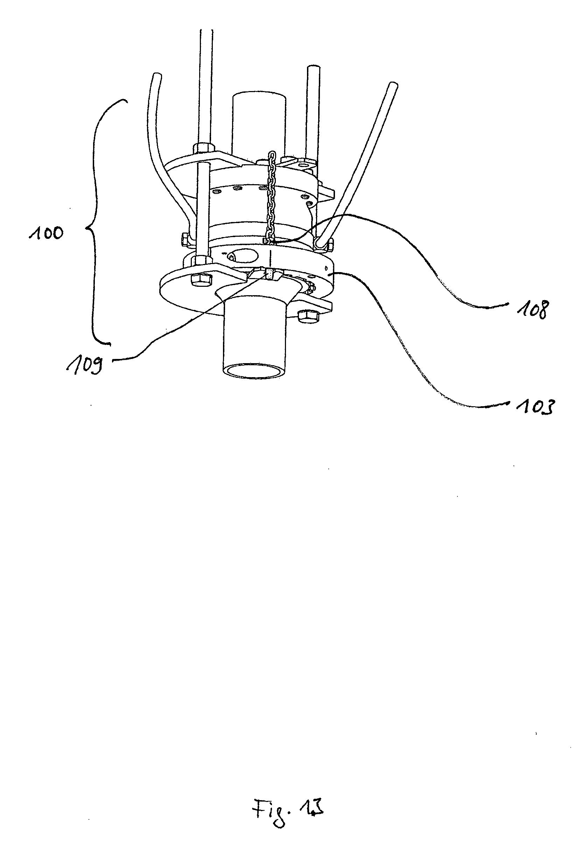

Fig. 13 zeigt die Sicherheitstrennvorrichtung 100 in einem sechsten zusammengebauten Zustand. In diesem sechsten Zustand wird ein Sicherheitsbolzen 108 durch ein Loch in dem Klemmring 103 geschoben und an eine Arretierung 109 befestigt. Bevorzugter Weise weist der Sicherheitsbolzen 108 als Materialkomponente Messing auf. Der Sicherheitsbolzen verhindert bevorzugt eine Aktivierung der Sicherheitstrennvorrichtung 100 bei sehr geringen Kräften, welche zum Beispiel durch sehr geringe Windbewegungen eines Eisenbahnwagons verursacht werden. In vorteilhafter Weise wird der Sicherheitsbolzen durchtrennt, wenn eine Zugkraft an dem Hebelarm 102 und damit an dem zweiten Teil 107 der Sicherheitstrennvorrichtung angreift, wobei die Zugkraft mit Hilfe eines aktivierten Auslösers zum Beispiel in Form einer komplett gespannten Kette, erzeugt ist.

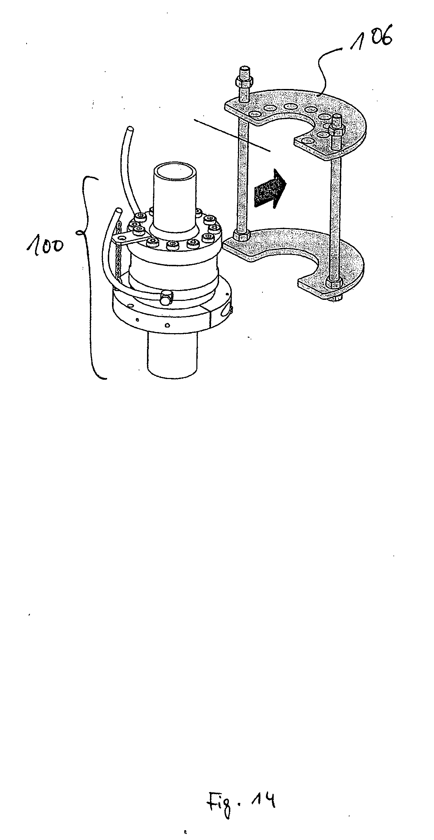

Fig. 14 zeigt eine perspektivische Ansicht der Sicherheitstrennvorrichtung 100 in einem siebten zusammengebauten Zustand. In diesem zusammengebauten Zustand wird die Montagevorrichtung 106 von der Sicherheitstrennvorrichtung 100 entfernt.

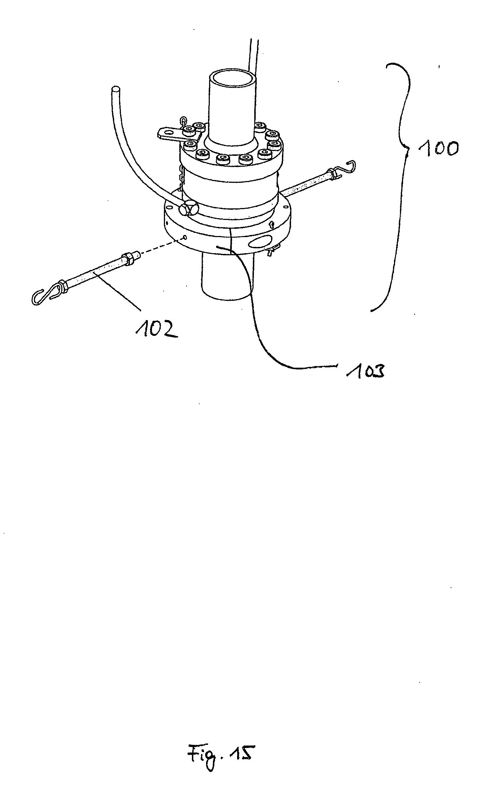

Fig. 15 zeigt eine perspektivische Ansicht der Sicherheitstrennvorrichtung 100 in einem achten zusammengebauten Zustand. In diesem zusammengebauten Zustand wird der Hebelarm 102 an den Klemmring 103 montiert, beispielsweise eingeschraubt. An dem Hebelarm 102 kann ein Auslöser befestigt werden, vorzugsweise eine Kette. Der Auslöser kann weiterhin an einer ersten Stelle eines Schutzkorbes und/oder an einer zweiten Stelle eines Schutzkorbes befestigt werden. Eine Befestigung des Auslösers an zwei unterschiedlichen Stellen eines Schutzkorbes kann ein Auslösen des Auslösers bei einer Relativbewegung des Kessels gegenüber dem Schutzkorb sowohl in eine erste Richtung als auch in eine zweite von der ersten Richtung verschiedene Richtung ermöglichen. Insbesondere ist die zweite Richtung entgegengesetzt zur ersten Richtung orientiert.

## Patentansprüche

1. Fluidverladevorrichtung mit einem Verladearm mit zumindest einer Fluidleitung zum Transport eines Fluids zwischen der Fluidverladevorrichtung und einem transportablen, bewegbar angeordneten, landgebundenen Kessel, mit einer Ankopplungsvorrichtung zum Ankoppeln der Fluidleitung an den Kessel und mit einer Sicherheitstrennvorrichtung in der Fluidleitung, wobei die Sicherheitstrennvorrichtung in der Lage ist, die Fluidleitung zu verschließen und die Fluidleitung derart aufzutrennen, dass deren Verbindung zum Kessel getrennt ist, wobei ein kraftübertragender, mechanisch wirkender Auslöser mit der Sicherheitstrennvorrichtung verbunden ist, der bei einer Bewegung des Kessels die Sicherheitstrennvorrichtung aktiviert.

2. Fluidverladevorrichtung nach Anspruch 1, **dadurch gekennzeichnet, dass** der Auslöser mit einem in Relation zum Kessel raumfesten Befestigungspunkt verbunden ist und eine Zugkraft an der Sicherheitstrennvorrichtung zum Auslösen der Sicherheitstrennvorrichtung erzeugt, hervorgerufen durch die Bewegung des Kessels.

3. Fluidverladevorrichtung nach Anspruch 1 oder 2, **dadurch gekennzeichnet, dass** der Auslöser sowohl bei einer Bewegung des Kessels in eine erste Richtung als auch bei einer Bewegung in eine zweite, bevorzugt zur ersten entgegengesetzt orientierten Richtung die Sicherheitstrennvorrichtung aktiviert.

4. Fluidverladevorrichtung nach einem der vorhergehenden Ansprüche, **dadurch gekennzeichnet, dass** der Auslöser an einem Schutzkorb angeordnet ist, wobei der Schutzkorb auf den Kessel verfahrbar ist und einen Schutz vor einem Herunterfallen vom Kessel im Bereich der angekoppelten Ankopplungsvorrichtung bildet.

5. Fluidverladevorrichtung nach einem der vorhergehenden Ansprüche, **dadurch gekennzeichnet, dass** der Auslöser ein Verzögerungsglied aufweist, bevorzugt in Form einer Kette.

6. Fluidverladevorrichtung nach einem der vorhergehenden Ansprüche, **dadurch gekennzeichnet, dass** die Sicherheitstrennvorrichtung eine Sicherung gegen unbeabsichtigtes Auslösen aufweist, vorzugsweise in Form eines abscherfähigen Sicherungsstifts, der zwei Hälften der Sicherheitstrennvorrichtung miteinander verbindet.

7. Fluidverladevorrichtung nach einem der vorhergehenden Ansprüche, **dadurch gekennzeichnet, dass** die Sicherheitstrennvorrichtung oberhalb des Kessels angeordnet ist.

8. Fluidverladevorrichtung nach einem der vorhergehenden Ansprüche, **dadurch gekennzeichnet, dass** der Auslöser eine Umwandlung einer nahezu linearen Bewegung des Kessels in eine Drehbewegung der Sicherheitstrennvorrichtung ermöglicht.

9. Fluidverladevorrichtung nach einem der vorhergehenden Ansprüche, **dadurch gekennzeichnet, dass** neben der Fluidleitung eine Gasleitung vorhanden ist, die eine Gasabführung aus dem Kessel erlaubt, wobei die Fluidleitung und die Gasabführung jeweils mittels einer Sicherheitstrennvorrichtung ausgestattet sind, die jeweils durch Bewegung des Kessels ausgelöst werden.

10. Verfahren zum Auftrennen einer Fluidleitung eines Verladearms von einem transportablen, bewegbar angeordneten, landgebundenen Transportkessel mittels einer in der Fluidleitung angeordneten Sicherheitstrennvorrichtung, wobei beim Auftrennen die Fluidleitung verschlossen wird, und ein Auftrennen der Sicherheitstrennvorrichtung durch Bewegung des Transportkessels erfolgt.

11. Verfahren nach Anspruch 10, **dadurch gekennzeichnet, dass** nach dem Auftrennen ein Teil der getrennten Sicherheitstrennvorrichtung mit der abgetrennten Fluidleitung aufgrund einer sich dadurch veränderten Gewichtsverlagerung am Verladearm sich vom Transportkessel entfernt, bevorzugt jedoch nur bis zum Erreichen einer Wegbegrenzung, die vorzugsweise durch den Auslöser gebildet wird.
